# EUROPÄISCHE PATENTSCHRIFT

(11) **EP 0 598 217 B1**
(45) Veröffentlichungstag und Bekanntmachung des Hinweises auf die Patenterteilung: **08.01.1997**
(21) Anmeldenummer: 93116465.1
(22) Anmeldetag: 12.10.1993
(51) Int. Cl.: B60N 3/02

(54) **Haltegriff für Fahrzeuginnenräume**
Handgrip for the passenger compartment of vehicles
Poignée pour l'habitecle de véhicules

(30) Priorität: 16.10.1992 DE 9213972 U
(43) Veröffentlichungstag der Anmeldung: 25.05.1994
(73) Patentinhaber: Utescheny - Endos GmbH, D-75059 Zaisenhausen (DE)
(72) Erfinder: Schäfer, Frank, D-75056 Sulzfeld (DE); Utescheny, Ralf, D-75059 Zaisenhausen (DE)
(74) Vertreter: Clemens, Gerhard, Dr.-Ing.

(56) Entgegenhaltungen:
- EP-A- 0 008 315
- DE-A- 3 219 755
- DE-U- 8 629 205
- DE-U- 9 200 913
- DE-U- 9 213 972

## Beschreibung

Die Erfindung betrifft einen Haltegriff für Fahrzeuginnenräume mit einem U-förmigen Haltebügel, mit einem Anschlagteil, an dem der Haltebügel mit seinen beiden Bügelenden schwenkbar gelagert ist, bei dem der Haltebügel aus drei gespritzten Kunststoffteilen zusammengesteckt ist, nämlich einem rohrförmigen, geradlinigen Mittelteil mit unrundem Innenquerschnitt und zwei gebogenen Endteilen, bei dem die beiden Endteile je mit einer formschlüssig in das Mittelteil passenden Verdrehungssicherung und einer beweglichen, in das Mittelteil passenden Rastzunge ausgestattet sind und bei dem die Endteile mit ihren Rastzungen und Verdrehungssicherungen von gegenüberliegenden Seiten in das Mittelteil gesteckt und dort durch Einrasten der Rastzungen gehaltert sind.

Aus DE-U-92 00 913 ist ein Haltegriff dieser Art bekannt, bei dem in die Innenwand des Mittelteils zwei einander diametral gegenüberliegene Stufen eingearbeitet sind, die als Gegenrast zu den beiden Rastzungen dienen. Beim Rastvorgang müssen die Endteile über ihre Endstellung hinaus gegeneinandergepreßt werden, damit die Rast einfallen kann und die Endteile in ihrer endgültigen Stellung hält. Die dazu erforderliche Elastizität muß für jede Rastzunge in der zugehörigen Hälfte des Mittelteils liegen. Eine so hohe Längselastizität ist nachteilig für den späteren gewünschten strammen Sitz der drei Teile aneinander.

Aufgabe der Erfindung ist es, die Anforderungen an die Elastizität zu verringern.

Die Erfindung ist dadurch gekennzeichnet, daß die beiden Rastzungen als Rast und dazu passende Gegenrast ausgebildet sind.

Die für das Einschnappen der Rast erforderliche Elastizität wird bei sonst vergleichbaren Toleranzbedingungen durch die gesamte Länge des Mittelteils aufgebracht. Es ist also eine nur etwa halb so große Längselastizität erforderlich wie beim Stand der Technik.

Bei dem beschriebenen bekannten Haltegriff ist der Querschnitt des Mittelteils ein deformiertes Rechteck mit zwei einander gegenüberliegenden geraden Rechteckseiten. Entlang dieser geraden Rechteckseiten sind die als Rastzungen ausgebildeten Verdrehungssicherungen beweglich. Als Verdrehungssicherung füllen sie aber, wegen ihrer gleichzeitigen Funktion als Rastzungen, in Längsrichtung der genannten langen Rechteckseiten den Querschnitt nicht vollständig aus und die dadurch entstehende Lücke geht als Verdrehungssicherung verloren.

Die Verdrehungssicherung ist aber wichtig, weil an dem Mittelteil die Hand der Bedienungsperson angreift und in vielen Fällen mit der Tendenz, das Mittelteil gegenüber den Endteilen zu verdrehen.

Eine Weiterbildung der Erfindung erzielt eine günstigere Verdrehungssicherung bei gleichzeitig günstigerer Beweglichkeit der Rastzungen dadurch, daß die Verdrehungssicherung formschlüssig den gesamten Querschnitt des Mittelteils ausfüllt und daß die Rastzungen als Verlängerung der zugehörigen Verdrehungssicherung ausgebildet sind.

Eine bevorzugte Ausgestaltung der Erfindung, die sich durch Vorteile bei der Entformung der Endteile auszeichnet, ist dadurch gekennzeichnet, daß die Längsachse des Mittelteils sich in einer Rastebene erstreckt und daß die beiden Rastzungen in der Rastebene gegen die ihnen innewohnende elastische Rückstellkraft beweglich und mit gegeneinandergerichteten, in der Rastebene orientierten Haken ausgestattet sind.

Die Entformungsrichtung ist dann senkrecht zur Rastebene und das entspricht dann bei einer bevorzugten geometrischen Ausgestaltung der Endteile der günstigsten Entformungsrichtung für die übrigen Elemente der Endteile.

Vorzugsweise empfiehlt sich in einem solchen Fall eine Ausgestaltung, die dadurch gekennzeichnet ist, daß die Haken eine zur jeweils zugehörigen Einsteckseite des Mittelteils gerichtete Rastfläche aufweisen, die, bezogen auf die Ruhestellung der betreffenden Rastfläche, etwa senkrecht zur Längsachse des Mittelteils steht, und daß die Haken gegeneinander gerichtete Schrägflächen an ihren freien Enden aufweisen, die so orientiert sind, daß die Rastzungen mit den Schrägflächen beim gegeneinandergerichteten Einschieben in das Mittelteil aufeinander gleiten, bis die Rasthaken ineinander einfallen zur Anlage der Rastflächen gegeneinander.

Auf diese Weise wird einfach und ohne komplizierte Formelemente eine Rast mit Gegenrast erzielt, die zuverlässig einrastet und eingerastet hinreichend sicheren Halt bietet.

In der Spritztechnik am einfachsten herstellbar ist ein hohler Innenquerschnitt des Mittelteils, der etwa dem Außenquerschnitt des Mittelteils ähnlich ist ist. Dann ist die Wandstärke auf dem ganzen Umfang etwa gleich groß. Das ist bei dem Mittelteil des oben erwähnten Standes der Technik nicht der Fall. Dort ist wegen der kombinierten Funktion der Rastzungen gleichzeitig als Verdrehungssicherungen ein komplizierter Innenquerschnitt in der Form eines mehrfach ausgestülpten Rechteckes vorgesehen.

Eine Weiterbildung der Erfindung nutzt die einfache Herstellbarkeit des ovalen Innenquerschnitts bei ovalem Außenquerschnitt und ist dadurch gekennzeichnet, daß der Innenquerschnitt des Mittelteils ein Oval ist, dessen Längsachse im spitzen Winkel von 10 bis 20^{o}, vorzugsweise 15^{o}, die Rastebene schneidet und entsprechend dem etwa ovalen Außenquerschnitt des Mittelteils orientiert ist.

In einem Oval läßt sich eine Verdrehungssicherung, insbesondere wenn sie, wie vorzugsweise der Fall, wenigstens auf einem Längsabschnitt den ganzen Querschnitt ausfüllt, einfach und zuverlässig gestalten.

Um die Bedienung komfortabler zu gestalten, empfiehlt es sich, daß das Mittelteil mit einem Griffmaterial, vorzugsweise aus Echtleder, Kunstleder oder Kunststoff-Folie ummantelt ist, und vorzugsweise, daß das Griffmaterial mit einer Schaumstoff-Folie unterlegt ist. Das Griffmaterial wird vorzugsweise um die Stirnseiten des Mittelteils herumgeschlagen.

Auch zur Vermeidung von Verletzungen bei der Bedienung empfiehlt es sich, daß die in das Mittelteil eingesteckten Endteile in ihrer Außenkontur die des gegebenenfalls mit Griffmaterial umhüllten Mittelteils etwa fortsetzen, und vorzugsweise, daß die in das Mittelteil eingesteckten und eingerasteten Endteile lückenlos an den gegebenenfalls mit Griffmaterial umschlagenen Stirnenden des Mittelteils anliegen.

Die Erfindung wird nun anhand der beigefügten Zeichnung näher erläutert.

In der Zeichnung zeigt:
- Figur 1: im Querschnitt montiert einen Haltegriff in Ruhestellung,

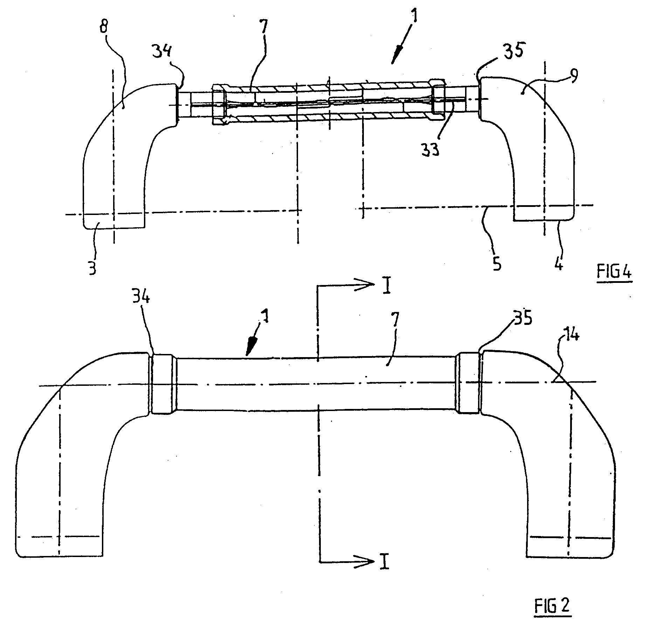

- Figur 2: den Haltegriff in Richtung des Pfeils II aus Figur 1 gesehen,
- Figuren 3a - 3d: das Mittelteil aus Figur 2 geschnitten mit den abgebrochenen Enden der beiden Endteile in vom Beginn des Einsteckens der Endteile (Figur 3a) bis zum völligen Einrasten der Rastzungen der Endteile im Mittelteil (Figur 3d), und
- Figur 4: die Teile aus Figur 2 in der Ansicht gemäß Figur 2, das Mittelteil geschnitten und die Endteile noch nicht ganz eingesteckt.

In der Zeichnung ist mit 1 der Haltebügel eines Haltegriffs für Fahrzeuginnenräume bezeichnet, der an einem Anschlagteil 2 mit seinen beiden Bügelenden 3 und 4 schwenkbar um eine Achse 5 gelagert ist. Der Anschlagteil 2 ist versenkt befestigt, vorzugsweise im Bereich des Übergangs der Seitenwand 6 des Fahrgastraums zum Himmel.

Der Haltebügel 1 besteht aus drei gespritzten Kunststoffteilen, die zusammengesteckt sind, und zwar aus einem rohrförmigen, geradlinigen Mittelteil 7 mit unrundem Innenquerschnitt und zwei gebogenen Endteilen 8, 9. Die beiden Endteile 8, 9 weisen je eine formschlüssig in das Mittelteil 7 passende Verdrehungssicherung 10, 11 auf, die mit ihrem Querschnitt vollständig den ovalen Innenquerschnitt des Mittelteils ausfüllt. In Verlängerung der Verdrehungssicherungen sind Rastzungen 12, 13 an den Endteilen vorgesehen.

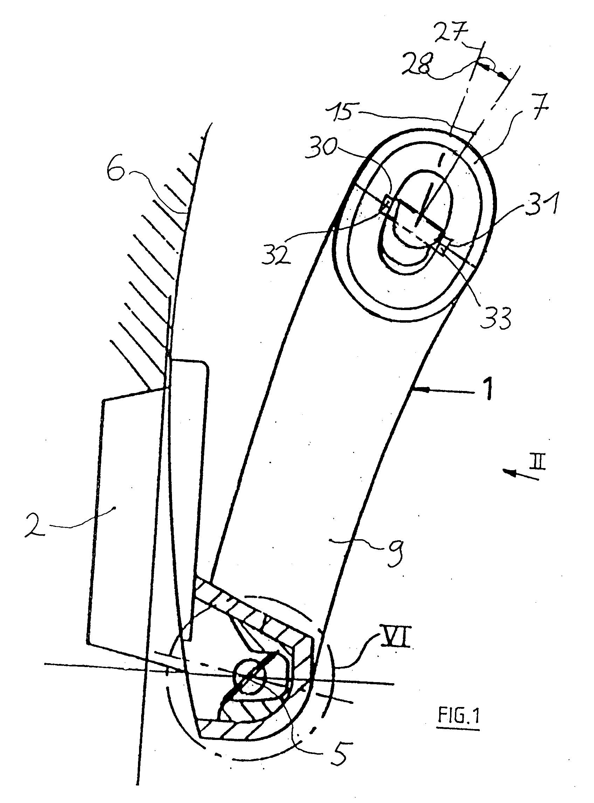

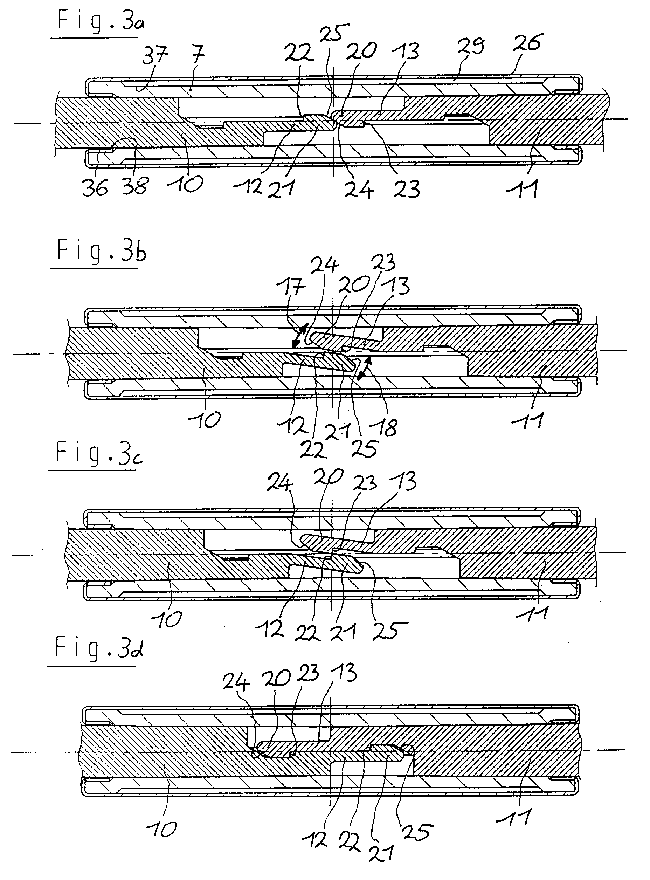

Die Längsachse 14 des Mittelteils erstreckt sich in einer in Figur 1 eingezeichneten Rastebene 15. Die beiden Rastzungen 12, 13 sind in der Rastebene gegen die ihnen innewohnende elastische Rückstellkraft beweglich, die Rastzunge 13 entsprechend dem Doppelpfeil 17, und die Rastzunge 12 entsprechend dem Doppelpfeil 18. Die Rastzungen sind mit gegeneinandergerichteten, in der Rastebene 15 orientierten Haken 20, 21 ausgestattet. Jeder der Haken 20, 21 hat eine jeweils zur zugehörigen Einsteckseite des Mittelteils 7, das ist für den Haken 21 die in Figur 3 links gezeichnete Seite, gerichtete Rastfläche 22, 23, die, bezogen auf die Ruhestellung der betreffenden Rastfläche, etwa senkrecht zur Mittelachse 14 des Mittelteils steht. Die Haken weisen an ihren freien Enden einander entgegengerichtete Schrägflächen 24, 25 auf, die so orientiert sind, daß die Rastzungen mit ihren Schrägflächen beim gegeneinandergerichteten Einschieben in das Mittelteil aufeinander gleiten, bis die Haken ineinander einfallen zur Anlage der Rastflächen gegeneinander.

In Figur 4 sind die Teile so gezeichnet, daß die Schrägflächen 24, 25 gerade aufeinandertreffen und in Figur 3 sind die Rasthaken ausgezogen eingefallen und gestrichelt kurz vor dem Einfallen der Rast dargestellt. Der Innenquerschnitt des Mittelteils ist, wie aus Figur 1 ersichtlich, oval. Die Längsachse 27 des Ovals bildet mit der Rastebene 15 einen spitzen Winkel 28 von 10 bis 20^{o}, vorzugsweise 15^{o}. Entsprechend ist auch der ovale Außenquerschnitt des Mittelteils geometrisch orientiert. Im Inneren des Mittelteils 7 sind diametral einander gegenüber Längsnuten 30, 31 vorgesehen, in die entsprechend gestaltete Federn 32, 33 ... beidseitig an beiden Rastzungen 12, 13 nach Art einer Nut- und Federführung eingreifen.

Zur Verbesserung der Handhabung ist das Mittelteil 7 mit Griffmaterial 26 aus Echtleder, Kunstleder oder Kunststoff-Folie ummantelt. Das Griffmaterial 26 ist an den Stirnseiten des Mittelteils bis ins Innere des Mittelteils umgeschlagen und im Bereich des Zugriffs mit einer Schaumstoff-Folie 29 unterlegt. Für die Schaumstoff-Folie 29 und den Umschlag 36 des Griffmaterials sind Ausnehmungen 37, 38 im Mittelteil 7 vorgesehen. Das so ummantelte Mittelteil 7 paßt an seinen Stirnseiten lückenlos zwischen die eingesetzten und verrasteten Endteile 8, 9.

Die Außenkontur der eingesteckten Endteile geht in die Außenkontur des Mittelteils im wesentlichen bündig über mit einem das Mittelteil als Griffstück betonenden optisch wirkenden kleinen Absatz 34, 35.

## Patentansprüche

1. Haltegriff für Fahrzeuginnenräume
mit einem U-förmigen Haltebügel (1),
mit einem Anschlagteil (2), an dem der Haltebügel mit seinen beiden Bügelenden (3, 4) schwenkbar gelagert ist, bei dem der Kaltebügel aus drei gespritzten Kunststoffteilen zusammengesteckt ist, nämlich einem rohrförmigen, geradlinigen Mittelteil (7) mit unrundem Innenquerschnitt und zwei gebogenen Endteilen (8, 9),
bei dem die beiden Endteile (8, 9) je mit einer formschlüssig in das Mittelteil (7) passenden Verdrehungssicherung (10, 11) und einer beweglichen, in das Mittelteil passenden Rastzunge (12, 13) ausgestattet sind und bei dem die Endteile (8, 9) mit ihren Rastzungen (12, 13) und Verdrehungssicherungen (10, 11) von gegenüberliegenden Seiten in das Mittelteil (7) gesteckt und dort durch Einrasten der Rastzungen gehaltert sind,
**dadurch gekennzeichnet, daß**
die beiden Rastzungen (12, 13) als Rast und dazu passende Gegenrast ausgebildet sind.

2. Haltegriff nach Anspruch 1,
**dadurch gekennzeichnet, daß**
- die Verdrehungssicherung (10, 11) formschlüssig den gesamten Querschnitt des Mittelteils ausfüllt und
- die Rastzungen (12, 13) als Verlängerung der zugehörigen Verdrehungssicherung ausgebildet sind.

3. Haltegriff nach Anspruch 2,
**dadurch gekennzeichnet, daß**
- die Längsachse (14) des Mittelteils (7) sich in einer Rastebene (15) erstreckt und
- die beiden Rastzungen (12, 13) in der Rastebene gegen die ihnen innewohnende elastische Rückstellkraft beweglich und mit gegeneinandergerichteten, in der Rastebene orientierten Haken (20, 21) ausgestattet sind.

4. Haltegriff nach einem der vorhergehenden Ansprüche,
**dadurch gekennzeichnet, daß**
- die Haken (20, 21) eine zur jeweils zugehörigen Einsteckseite des Mittelteils (7) gerichtete Rastfläche (22, 23) aufweisen, die, bezogen auf die Ruhestellung der betreffenden Rastfläche, etwa senkrecht zur Längsachse (14) des Mittelteils steht, und
- die Haken gegeneinander gerichtete Schrägflächen (24, 25) an ihren freien Enden aufweisen, die so orientiert sind, daß die Rastzungen mit den Schrägflächen beim gegeneinandergerichteten Einschieben in das Mittelteil aufeinander gleiten, bis die Rasthaken ineinander einfallen zur Anlage der Rastflächen gegeneinander.

5. Haltegriff nach Anspruch 4,
**dadurch gekennzeichnet, daß**
der Innenquerschnitt des Mittelteils (7) ein Oval ist, dessen Längsachse (27) im spitzen Winkel (28) von 10 bis 20°, vorzugsweise 15°, die Rastebene (15) schneidet und entsprechend dem etwa ovalen Außenquerschnitt des Mittelteils orientiert ist.

6. Haltegriff nach einem der vorhergehenden Ansprüche,
**dadurch gekennzeichnet, daß**
das Mittelteil (7) mit einem Griffmaterial (26), vorzugsweise aus Echtleder, Kunstleder oder Kunststoff-Folie ummantelt ist.

7. Haltegriff nach Anspruch 6,
**dadurch gekennzeichnet, daß**
das Griffmaterial (26) mit einer Schaumstoff-Folie (29) unterlegt ist.

8. Haltegriff nach einem der vorhergehenden Ansprüche,
**dadurch gekennzeichnet, daß**
die in das Mittelteil (7) eingesteckten Endteile (8, 9) in ihrer Außenkontur die des gegebenenfalls mit Griffmaterial (26) umhüllten Mittelteils etwa fortsetzen.

9. Haltegriff nach einem der vorhergehenden Ansprüche,
**dadurch gekennzeichnet, daß**
die in das Mittelteil (7) eingesteckten und eingerasteten Endteile (8, 9) lückenlos an den gegebenenfalls mit Griffmaterial (26) umschlagenen Stirnenden des Mittelteils anliegen.

## Claims

1. Hand grip for vehicle passenger compartments, having a U-shaped holding hoop (1), having a stop part (2), on which the holding hoop is mounted pivotably by its two hoop ends (3, 4), in the case of which hand grip the holding hoop is put together from three injection-moulded plastic parts, namely a tubular, rectilinear central part (7) having a non-circular inner cross-section and two bent end parts (8, 9), in the case of which the two end parts (8, 9) are each equipped with an anti-twisting means (10, 11) fitting positively into the central part (7) and a movable latching tongue (12, 13) fitting into the central part, and in the case of which the-end parts (8, 9) are pushed by their latching tongues (12, 13) and anti-twisting means (10, 11) from opposite sides into the central part (7) and are retained there by engagement of the latching tongues, characterized in that the two latching tongues (12, 13) are designed as a latch and mating latch matched thereto.

2. Hand grip according to Claim 1, characterized in that
- the anti-twisting means (10, 11) fills the entire cross-section of the central part in a positive manner and
- the latching tongues (12, 13) are designed as an extension of the associated anti-twisting means.

3. Hand grip according to Claim 2, characterized in that
- the longitudinal axis (14) of the central part (7) extends in a latching plane (15) and
- the two latching tongues (12, 13) are movable in the latching plane counter to the elastic restoring force inherent to them and are equipped with oppositely directed hooks (20, 21) oriented in the latching plane.

4. Hand grip according to one of the preceding claims, characterized in that
- the hooks (20, 21) have a latching face (22, 23) which is directed towards the respectively associated insertion side of the central part (7) and, relative to the rest position of the pertinent latching face, is approximately perpendicular with respect to the longitudinal axis (14) of the central part, and
- at their free ends, the hooks have oppositely directed sloping faces (24, 25) which are oriented in such a manner that the latching tongues, when being pushed in an oppositely directed manner into the central part, slide on one another by means of the sloping faces until the latching hooks click into one another to rest the latching faces against one another.

5. Hand grip according to Claim 4, characterized in that the inner cross-section of the central part (7) is an oval, the longitudinal axis (27) of which intersects the latching plane (15) at an acute angle (28) of 10 to 20°, preferably 15°, and is oriented corresponding to the approximately oval outer cross-section of the central part.

6. Hand grip according to one of the preceding claims, characterized in that the central part (7) is covered by a grip material (26), preferably made of genuine leather, synthetic leather or plastic film.

7. Hand grip according to Claim 6, characterized in that the grip material (26) is backed by a foam film (29).

8. Hand grip according to one of the preceding claims, characterized in that the outer contour of the end parts (8, 9), inserted into the central part (7), approximately continues that of the central part, which is optionally encased with grip material (26).

9. Hand grip according to one of the preceding claims, characterized in that the end parts (8, 9), inserted into the central part (7) and engaged there, rest without a gap against the ends of the central part, which ends have optionally been wrapped in grip material (26).

## Revendications

1. Poignée pour habitacles de véhicules, comprenant un étrier de maintien (1) de forme en U et une pièce d'attache (2) sur laquelle l'étrier de maintien est monté de façon articulée par ses deux extrémités (3, 4), poignée dont l'étrier de maintien est composé de trois parties moulées par injection en matière plastique et assemblées par emboîtement, à savoir d'une partie centrale (7) tubulaire et rectiligne, ayant une section droite intérieure non circulaire, et de deux parties terminales (8, 9) courbes, les deux parties terminales (8, 9) étant munies chacune d'un moyen anti-rotation (10, 11) s'ajustant à complémentarité de formes dans la partie centrale (7), ainsi que d'une languette d'arrêt (12, 13) mobile s'ajustant dans la partie centrale, les parties terminales (8, 9) étant emboîtées par leurs languettes d'arrêt (12, 13) et leurs moyens anti-rotation (10, 11) à partir de côtés opposés dans la partie centrale (7) et fixées dans celle-ci par encliquetage des languettes d'arrêt, caractérisée en ce que les deux languettes d'arrêt (12, 13) sont réalisées comme un élément d'arrêt et un élément d'arrêt antagoniste qui y est accordé.

2. Poignée selon la revendication 1, caractérisée en ce que
- le moyen anti-rotation (10, 11) remplit, à complémentarité de formes, toute la section droite intérieure de la partie centrale et
- les languettes d'arrêt (12, 13) sont réalisées comme un prolongement du moyen anti-rotation coordonné.

3. Poignée selon la revendication 2, caractérisée en ce que
- l'axe longitudinal (14) de la partie centrale (7) est contenu dans un plan d'encliquetage (15) et
- les deux languettes d'arrêt (12, 13) sont déplaçables dans le plan d'encliquetage, à l'encontre de leur force de rappel élastique intrinsèque, et sont munies de crochets (20, 21) dirigés l'un vers l'autre et orientés dans le plan d'encliquetage.

4. Poignée selon une des revendications précédentes, caractérisée en ce que
- les crochets (20, 21) présentent une face d'arrêt (22, 23) tournée vers le côté d'emboîtement coordonné de la partie centrale (7) et qui, à sa position de repos, est orientée à peu près perpendiculairement à l'axe longitudinal (14) de la partie centrale et
- les crochets présentent, à leurs extrémités libres, des faces (24, 25) inclinées dans des directions opposées et orientées de manière que les languettes d'arrêt glissent l'une sur l'autre par leurs faces inclinées lorsqu'elles sont emboîtées l'une vers l'autre dans la partie centrale, jusqu'à ce que les crochets s'accrochent ou s'encliquettent mutuellement derrière les faces d'arrêt.

5. Poignée selon la revendication 4, caractérisée en ce que la section droite intérieure de la partie centrale (7) est un ovale dont le grand axe ou grand diamètre (27) coupe le plan d'encliquetage (15) sous un angle aigu (28) de 10 à 20°, de préférence de 15°, et est orientée suivant la section droite extérieure, à peu près ovale, de la partie centrale.

6. Poignée selon une des revendications précédentes, caractérisée en ce que la partie centrale (7) est gainée d'un matériau de préhension ou matériau offrant une bonne prise (26), de préférence de cuir véritable, cuir synthétique ou d'une feuille de matière plastique.

7. Poignée selon la revendication 6, caractérisée en ce qu'une feuille de mousse (29) est placée sous le matériau de préhension (26).

8. Poignée selon une des revendications précédentes, caractérisée en ce que les parties terminales (8, 9), lorsqu'elles ont été emboîtées dans la partie centrale (7), prolongent à peu près, par leur contour extérieur, la partie centrale, éventuellement gainée de matériau de préhension (26).

9. Poignée selon une des revendications précédentes, caractérisée en ce que les parties terminales (8, 9), lorsqu'elles ont été emboîtées et encliquetées dans la partie centrale (7), s'appliquent sans interstice contre les extrémités de la partie centrale, extrémités qui sont éventuellement recouvertes d'un rabat de matériau de préhension (26).
